(19) Europäisches Patentamt
European Patent Office
Office européen des brevets

(11) **EP 3 260 945 A1**

(12) **DEMANDE DE BREVET EUROPEEN**

(43) Date de publication:
**27.12.2017 Bulletin 2017/52**

(51) Int Cl.:
*G05D 1/08* ^(2006.01)    *B64C 29/00* ^(2006.01)

(21) Numéro de dépôt: **17176713.0**

(22) Date de dépôt: **19.06.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **20.06.2016  FR 1655742**

(71) Demandeur: **Parrot Drones
75010 Paris (FR)**

(72) Inventeurs:
• **MARI MARI, Marc
75018 Paris (FR)**
• **LAVAGEN, Gauthier
93110 Rosny Sous-Bois (FR)**
• **BENATAR, Yoni
93260 LES LILAS (FR)**

(74) Mandataire: **Dupuis-Latour, Dominique et al
Bardehle Pagenberg
10, boulevard Haussmann
75009 Paris (FR)**

(54) **DRONE COMPRENANT DES AILES PORTANTES**

(57) L'invention concerne un procédé de contrôle dynamique d'attitude d'un drone à voilure tournante comprenant un corps de drone (12) comprenant une carte électronique contrôlant le pilotage du drone, quatre bras de liaison (16), chaque bras comprenant fixé solidairement un bloc propulseur (14). Les bras de liaison (16) forment des ailes portantes. Le drone vole en utilisant la portance des ailes, l'attitude du drone est contrôlée par l'envoi de commandes différenciées à un ou plusieurs desdits blocs propulseurs de manière à produire une rotation du drone autour de l'axe de roulis et/ou de tangage et/ou de lacet du drone depuis une position angulaire courante à une position angulaire finale, ces axes étant définis dans le repère du drone. L'invention concerne également un drone à voilure tournante (10) apte à mettre en oeuvre le procédé de contrôle dynamique.

Figure 5

**Description**

L'invention concerne les drones de loisir, notamment les drones à voilure tournante tels que les quadricoptères et analogues.

Ces drones volants comprennent un corps de drone et une pluralité de blocs propulseurs montés à l'extrémité de bras de liaison, chaque bloc propulseur étant muni d'une hélice entrainée par un moteur individuel. Les différents moteurs sont commandables de manière différenciée pour piloter le drone en attitude et en vitesse.

Un tel exemple est le *Rolling Spider* commercialisé par Parrot Drones SAS, Paris, France.

Ces quadricoptères sont équipés de quatre blocs propulseurs munis chacun d'hélice. Les hélices de deux blocs propulseurs tournent dans le sens horaire et les hélices des deux autres blocs propulseurs tournent dans le sens antihoraire. Les blocs propulseurs munis d'hélices tournant dans le même sens de rotation sont placés sur la même diagonale. Chaque hélice exerce sur le drone une force de traction due à la portance de l'hélice, cette force de traction étant dirigée vers le haut, et un moment qui est de sens opposé à son sens de rotation.

Les WO 2010/061099 A2, EP 2 364 757 A1 et EP 2 450 862 A1 (Parrot) décrivent le principe de pilotage d'un drone par l'intermédiaire d'un téléphone ou tablette multimédia à écran tactile et accéléromètres intégrés, par exemple un *smartphone* de type *iPhone* ou une tablette de type *iPad* (marques déposées).

Les commandes émises par le dispositif de pilotage sont au nombre de quatre, à savoir la rotation en roulis, c'est-à-dire le mouvement de rotation autour de son axe longitudinal, le tangage c'est-à-dire le mouvement de rotation autour de l'axe transversal, le cap aussi appelé lacet, c'est-à-dire la direction vers laquelle le drone est orienté et l'accélération verticale. Lorsqu'une commande de cap est demandée au drone, les blocs propulseurs ayant des hélices tournant dans un sens tournent plus vite, c'est-à-dire qu'une accélération des blocs propulseurs est réalisée alors que les deux autres blocs propulseurs tournent moins vite.

De la sorte, la somme des forces de portance compense le poids du drone mais la somme des moments n'est plus nulle et donc le drone tourne selon un cap. La rotation selon un cap du drone à droite ou à gauche dépend des deux blocs propulseurs en diagonale pour lesquels une accélération de leur rotation est demandée.

Lorsqu'une commande de tangage est demandée au drone, les blocs propulseurs situés dans la direction du drone sont ralentis et les blocs propulseurs situés à l'arrière par rapport à la direction de déplacement du drone sont accélérés.

Lorsqu'une commande de roulis est demandée au drone, les blocs propulseurs situés dans la direction de rotation souhaitée du drone sont ralentis et les blocs propulseurs situés du côté opposé sont accélérés. Toutefois, ce type de drone est limité dans son application, puisqu'il permet uniquement un vol quadricoptère c'est-à-dire à voilure tournante.

Il est connu dans le domaine des modèles réduits, un certain nombre de dispositifs volants, de type avion, qui permettent non pas un vol par sustentation et propulsion par une voilure tournante, mais un vol assuré par un propulseur et dont la portance est assurée par les ailes portantes dudit avion. Les avions sont donc considérés comme des appareils à voilure fixe. Les modèles réduits de type avion possèdent des ailerons qui sont des gouvernes aérodynamiques se déplaçant en sens opposé et servant à produire notamment un moment de roulis, un gouvernail de direction qui permet d'effectuer une rotation selon l'axe de lacet et une gouverne de profondeur permettant à l'avion d'effectuer une rotation en tangage. Toutefois, il est observé que ces modèles réduits présentent des difficultés de pilotage et font souvent l'objet de chutes dommageables au modèle réduit.

Le but de l'invention est de proposer un drone à voilure tournante permettant à un tel drone de voler non seulement en utilisant la portance des surfaces de rotation, à savoir la voilure tournante, mais également de voler tel qu'un avion en utilisant une voilure fixe, tout en bénéficiant du contrôle aisé qu'offrent les drones aujourd'hui.

A cet effet, l'invention propose un procédé de contrôle dynamique d'attitude d'un drone à voilure tournante comprenant un corps de drone comprenant une carte électronique contrôlant le pilotage du drone, quatre bras de liaison, chaque bras comprenant fixé solidairement un bloc propulseur.

De façon caractéristique, les quatre bras de liaison forment des ailes portantes, et lorsque le drone vole en utilisant la portance des quatre ailes, l'attitude du drone est contrôlée par l'envoi de commandes différenciées à un ou plusieurs desdits blocs propulseurs de manière à produire une rotation du drone autour de l'axe de roulis et/ou de tangage et/ou de lacet du drone depuis une position angulaire courante à une position angulaire finale, ces axes étant définis dans le repère du drone.

Selon diverses caractéristiques subsidiaires, prises isolément ou en combinaison :

- l'attitude du drone est contrôlée uniquement par l'envoi desdites commandes à un ou plusieurs desdits blocs propulseurs.

- le procédé comprend :

  • Une étape d'estimation d'un angle d'incidence $\alpha$ du corps de drone par rapport à l'horizontale,
  • Une étape de calcul de la vitesse aérodynamique V de déplacement du drone,
  • Une étape de détermination d'un angle d'inclinaison selon un axe de roulis $\varphi_c$ en fonction de l'angle d'incidence $\alpha$ estimé, de la vitesse aérodynamique V et d'une vitesse angulaire donnée autour d'un axe de cap $\psi_{usr}$, et
  • Une étape d'envoi d'une ou plusieurs commandes différenciées déterminées en fonction de l'angle d'inclinaison $\varphi_c$ déterminé à un ou plusieurs desdits blocs propulseurs pour contrôler l'attitude dudit drone.

- l'étape d'envoi d'une ou plusieurs commandes différenciées comprend la génération de valeurs de consigne d'angle en roulis et l'application de ces valeurs de consigne à une boucle d'asservissement de contrôle des moteurs du drone.
- les étapes du procédé sont effectuées périodiquement jusqu'à atteindre ladite position angulaire finale.
- l'angle d'incidence $\alpha$ est déterminé en fonction de l'angle de tangage $\theta$ dudit corps de drone.
- l'angle d'incidence $\alpha$ est déterminé tel que :

$$\alpha = |\theta| - 90^\circ$$

- l'angle d'inclinaison est tel que :

$$\varphi_c = \tan^{-1} \frac{\cos \alpha \, V \dot{\psi}_{ust}}{g}$$

g étant l'accélération de la pesanteur.
- le procédé comprend en outre :

o une étape d'estimation de la vitesse aérodynamique V de déplacement du drone à partir d'un modèle et
o une étape de mesure de l'altitude du drone,
o une étape d'envoi de commandes différenciées des moteurs de manière à produire un maintien de l'altitude du drone, cette étape comprenant une phase de commande en boucle fermée des moteurs.

- le contrôle de la vitesse horizontale du drone est réalisé par une modification de l'angle de tangage.

L'invention concerne également un drone à voilure tournante comprenant un corps de drone comprenant une carte électronique contrôlant le pilotage du drone, quatre bras de liaison, chaque bras comprenant fixé solidairement un bloc propulseur. De façon caractéristique, les quatre bras de liaison forment des ailes portantes et le drone est apte à mettre en oeuvre le procédé de contrôle dynamique d'attitude dudit drone décrit ci-dessus.

Nous allons maintenant décrire un exemple de mise en oeuvre de la présente invention, en référence aux dessins annexés.

La Figure 1 est une vue d'ensemble montrant le drone objet de l'invention vu du dessus lorsque le drone est au sol.
La Figure 2 est une vue de côté du drone conformément à l'invention lorsque le drone est en vol en utilisant la portance des ailes.
La Figure 3 est une vue de dessus du drone conformément à l'invention lorsque le drone est en vol en utilisant la portance des ailes.
La Figure 4 illustre une vue arrière du drone conformément à l'invention lorsque le drone est en vol en utilisant la portance des ailes.
La Figure 5 est un diagramme d'état du contrôle de l'attitude du drone conformément à l'invention.
La Figure 6 est un schéma par blocs des différents organes de contrôle et d'asservissement ainsi que de contrôle dynamique d'un drone à voilure tournante conformément à l'invention.

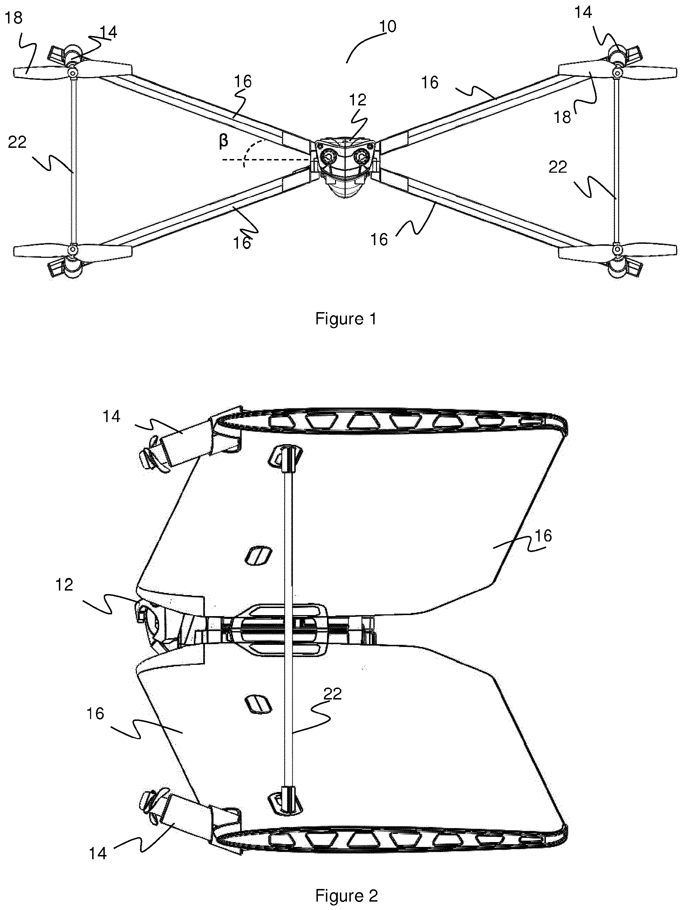

Nous allons maintenant décrire un exemple de réalisation de l'invention. Sur la Figure 1, la référence 10 désigne de façon générale un drone à voilure tournante. Selon l'exemple illustré en Figure 1, il s'agit d'un drone de type quadricoptère dérivé du modèle *Rolling Spider* commercialisé par Parrot Drones SAS, Paris, France.

Le drone quadricoptère comporte un corps de drone 12 et quatre blocs propulseurs 14 fixés solidairement respectivement aux quatre bras de liaison 16. Les blocs propulseurs 14 sont pilotés indépendamment par un système intégré de navigation et de contrôle d'attitude. Chaque bloc propulseur 14 est muni d'une hélice 18 entraînée par un moteur individuel. Les différents moteurs sont commandables de manière différenciée pour piloter le drone en attitude et en vitesse et avec production d'une force ascensionnelle.

Les hélices 18 de deux blocs propulseurs tournent dans le sens horaire et les hélices des deux autres blocs propulseurs tournent dans le sens antihoraire. Les blocs propulseurs munis d'hélices tournant dans le même sens de rotation sont placés sur la même diagonale.

De façon caractéristique de l'invention, les quatre bras de liaison 16 forment des ailes portantes, sensiblement perpendiculaires au plan des hélices, permettant au drone d'assurer un vol soit en voilure tournante soit un vol appelé en vol avion, de manière à bénéficier de la portance des ailes portantes.

Selon un mode de réalisation particulier, les blocs propulseurs sont fixés sensiblement à l'extrémité des ailes portantes tel qu'illustré en figure 1.

De manière alternative, les blocs propulseurs peuvent être fixés sur quasiment toute la longueur des ailes portantes, notamment au niveau du bord d'attaque de chacune des ailes, toutefois une distance minimale entre deux blocs propulseurs voisins est à respecter, cette distance ne devant pas être inférieure à la somme des rayons des deux hélices desdits blocs propulseurs voisins.

Conformément à l'invention, le drone comprend des moyens de conversion de vol permettant au drone, après décollage en mode quadricoptère, c'est-à-dire en utilisant la portance des surfaces de rotation, d'effectuer une conversion de sorte que le drone vole en utilisant la portance des ailes.

Pour ce faire, le drone effectue une conversion d'un angle donné, à savoir d'un angle $\theta$ compris par exemple de 20° à 90°, et de manière préférentielle un angle $\theta$ compris entre 20° et 80° de sorte que le drone bénéficie de la portance des quatre ailes pour voler. Ainsi, le drone est apte à voler classiquement en utilisant la portance des surfaces de rotation ou tel qu'un avion en utilisant la portance des ailes. Un tel drone présente l'avantage d'être apte à voler comme un avion mais permet un bon contrôle de la vitesse de vol puisqu'il est aussi apte à voler très lentement notamment si l'angle de conversion est un angle faible.

Si l'on définit le drone avant décollage selon les trois axes orthogonaux X, Y et Z, alors il sera appelé :

- axe X, l'axe de roulis qui est défini par le fait qu'une rotation du drone sur cet axe permet de faire déplacer le drone vers la droite ou vers la gauche, et

- axe Y, l'axe de tangage qui est défini par le fait qu'une rotation du drone sur cet axe permet de faire avancer ou reculer le drone,

- axe Z, axe de cap ou axe de lacet, qui est défini par le fait qu'une rotation du drone sur cet axe a pour effet de faire pivoter vers la droite ou vers la gauche l'axe principal du drone, donc la direction de progression du drone.

Ainsi, la conversion peut être définie par le fait que l'axe Z du drone, correspondant à l'axe de lacet lors du vol du drone en mode classique, c'est-à-dire en utilisant la portance de la voilure tournante, devient l'axe de roulis lorsque le drone passe en mode de vol avion, c'est-à-dire en utilisant la voilure fixe, autrement dit la portance des quatre ailes.

Le drone illustré en figure 1 comprend quatre bras de liaison sous forme d'ailes portantes, toutefois, un tel drone pourrait comporter plus de quatre ailes portantes.

Selon un mode de réalisation particulier, le corps de drone 12 est de forme par exemple allongée. Selon ce mode de réalisation, les ailes portantes du drone sont fixées sur tout ou partie de la longueur du corps de drone.

Le drone illustré en figure 1 est tel que les ailes portantes 16 sont positionnées respectivement de chaque côté du corps de drone défini par le plan médian horizontal du corps de drone 12 lorsque le drone est en position de vol avion et les ailes portantes sont symétriques et forment par exemple un dièdre.

Selon un autre mode de réalisation, les ailes portantes de part et d'autre du corps de drone peuvent ne pas être symétriques par rapport audit plan médian horizontal du corps de drone.

Il est observé également que le drone illustré en figure 1 est tel que les ailes portantes 16 sont situées de chaque côté du drone par rapport au plan médian vertical 12 lorsque le drone est en position de vol avion et les ailes portantes sont symétriques.

Selon un autre mode de réalisation, les ailes portantes de part et d'autre du corps de drone peuvent ne pas être symétriques par rapport audit plan médian vertical du corps de drone.

La structure du drone telle qu'illustrée en figure 1 présente une forme de X ayant un angle de dièdre positif sur les ailes supérieures par rapport au plan médian horizontal du corps de drone lorsque le drone est en position de vol avion et un angle de dièdre négatif de même valeur sur les ailes inférieures par rapport audit plan médian horizontal. Toutefois, le drone peut comprendre des angles de dièdre positif et négatif de valeurs différentes.

Par exemple, l'angle de dièdre positif sur les ailes supérieures est compris entre 15 et 25° et de préférence 20°. De même, selon le drone illustré, l'angle de dièdre négatif sur les ailes inférieures est compris entre 15° et 25° et de préférence 20°.

Tel qu'il peut être observé sur la figure 1, les ailes portantes présentent une envergure telle que le bras de levier entre le centre de gravité du drone et le bloc propulseur permet un vol stable en mode avion. Selon l'exemple illustré en figure 1, l'envergure est de 30 cm.

En outre, les ailes portantes présentent une surface de portance appropriée de sorte à permettre au drone de voler en mode avion en utilisant la portance des quatre ailes. La surface des ailes est déterminée de sorte à offrir une bonne portance sans impacter de façon majeure les performances de vol du drone en vol classique.

Tel qu'illustré en Figure 1, les ailes portantes 16 du drone forment un angle de flèche $\beta$ par rapport au corps de drone 12, l'angle de flèche $\beta$ peut être compris entre 5° et 20° et de préférence environ 10°.

Selon un mode de réalisation particulier, chacun des blocs propulseurs (hors hélices) du drone est dans le même plan que l'aile sur laquelle il est fixé. Autrement dit, chacune des hélices des blocs propulseurs est sur un plan sensiblement perpendiculaire au plan de la surface portante de l'aile sur laquelle l'hélice est fixée.

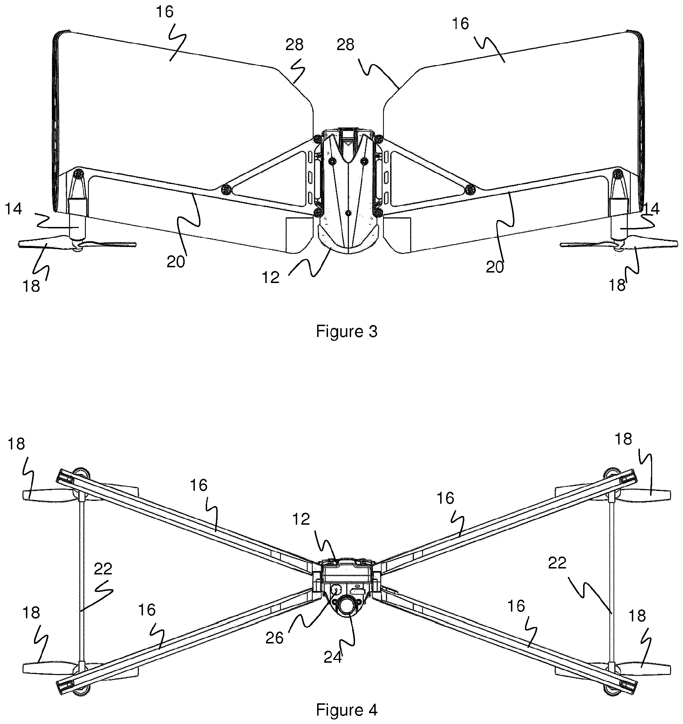

Toutefois, selon l'exemple de réalisation illustré en figure 1 et en figure 4, les quatre blocs propulseurs forment un angle d'inclinaison par rapport au plan médian horizontal du corps de drone, les deux blocs propulseurs positionnés d'un côté du corps de drone étant inclinés l'un vers l'autre respectivement selon un angle d'inclinaison vertical prédéterminé positif et un angle d'inclinaison vertical prédéterminé négatif. Et symétriquement, les deux blocs propulseurs positionnés de l'autre côté du corps de drone sont inclinés l'un vers l'autre respectivement selon le même angle d'inclinaison prédéterminé vertical positif et le même angle d'inclinaison prédéterminé vertical négatif.

En d'autres termes, les blocs propulseurs situés de part et d'autre du corps de drone au-dessus du plan médian horizontal du corps de drone, lorsque le drone est en position de vol avion, sont inclinés respectivement vers les blocs propulseurs situés du même côté du corps de drone en dessous dudit plan médian horizontal, et vice versa. Les blocs propulseurs situés de part et d'autre du corps de drone en-dessous dudit plan médian horizontal sont notamment inclinés respectivement vers les blocs propulseurs situés du même côté du corps de drone au-dessus du plan médian horizontal.

L'inclinaison des blocs propulseurs permet en mode avion de créer une composante horizontale de traction perpendiculaire à la direction d'avancement qui contribue à augmenter le couple disponible sur l'axe de lacet du drone, qui sinon résulterait uniquement du couple des hélices du drone. Cette augmentation de couple peut présenter un avantage pour le vol en mode avion, c'est-à-dire en utilisant la portance des ailes du drone. En effet, l'augmentation de couple permet de compenser l'inertie de déplacement du drone sur l'axe de lacet en mode avion, qui est beaucoup plus élevée que sur un drone classique, c'est-à-dire sans ailes portantes, du fait de la présence d'ailes portantes.

L'inclinaison des moteurs entraine une diminution de la portance générée puisqu'une partie de la traction produite par les moteurs est appliquée sur le plan horizontal. Toutefois, une telle inclinaison créant une composante horizontale de traction permet de contribuer à augmenter le contrôle du drone sur l'axe de lacet en mode avion puisque l'application d'une force horizontale sur le bras de levier existant entre les moteurs et le centre de gravité du drone, optimisé par le placement des blocs propulseurs sensiblement sur les extrémités des ailes, permet de créer un couple sur l'axe de lacet qui viendra s'ajouter au couple des hélices.

La traction nécessaire pour que le drone puisse voler en mode avion, c'est-à-dire en utilisant la portance des ailes, est inférieure à la traction nécessaire pour permettre au drone dans sa configuration de vol classique de maintenir un point fixe, c'est-à-dire un vol stationnaire.

En outre, il est à noter que l'axe Z du drone, correspondant à l'axe de lacet lorsque le drone vole en mode classique, c'est-à-dire en utilisant la voilure tournante, devient l'axe de roulis lorsque le drone vole en mode avion, c'est-à-dire sensiblement horizontalement en utilisant la portance des ailes.

Selon un mode de réalisation particulier, les angles d'inclinaison prédéterminés des quatre blocs propulseurs sont identiques en valeur absolue. Toutefois, selon un autre mode de réalisation, les blocs propulseurs situés au-dessus du plan médian horizontal du corps de drone lorsque le drone est en position de vol avion, peuvent avoir un angle d'inclinaison en valeur absolue différent des angles d'inclinaison des blocs propulseurs situés au-dessous dudit plan médian horizontal.

Selon un mode de réalisation particulier, les angles d'inclinaison prédéterminés sont compris entre 10° et 30°, et de préférence d'environ 20°.

Il a été observé qu'un angle d'inclinaison de 20° en valeur absolue appliqué aux blocs propulseurs a pour conséquence des pertes de traction d'environ 6%. En outre, la circulation du flux d'air autour des ailes quand les moteurs tournent a pour conséquence une augmentation des pertes de traction du fait de l'inclinaison des blocs propulseurs. Ainsi selon ce mode de réalisation, les pertes de traction sont d'environ 24%.

Selon un mode de réalisation particulier, les blocs propulseurs peuvent être sensiblement inclinés en convergeant sur l'axe médian principal du drone et donc avoir une valeur d'angle d'inclinaison par rapport au plan médian vertical du corps de drone lorsque le drone est en position de vol avion.

Le drone illustré en figures 1, 2 et 3 comprend quatre ailes portantes fixées sur le corps de drone, chaque aile ayant une forme de parallélogramme. Toutefois, d'autres formes d'ailes peuvent être envisagées.

Les ailes portantes 16 peuvent être reliées entre elles deux à deux par au moins un moyen de renfort 22.

Selon un mode de réalisation particulier, les ailes portantes situées d'un même côté du plan médian vertical du corps de drone lorsque le drone est en position de vol avion, sont reliées entre elles par au moins un moyen de renfort 22 fixé par exemple sensiblement à proximité des blocs propulseurs. La figure 1 illustre un mode de réalisation dans lequel un unique moyen de renfort est fixé entre les ailes portantes d'un même côté du drone.

Selon un mode de réalisation particulier du drone, les ailes peuvent être pourvues d'ailerons permettant de contrôler les rotations du drone lors d'un vol en mode avion.

Selon un autre mode de réalisation particulier, le drone peut être dépourvu de gouverne de direction telle que des gouvernes de type ailerons. Le déplacement du drone en vol en mode avion sera alors commandé par un contrôle de la vitesse de rotation des différents blocs propulseurs.

Le drone est en outre muni de capteurs inertiels (accéléromètres et gyromètres) permettant de mesurer avec une certaine précision les vitesses angulaires et les angles d'attitude du drone, c'est-à-dire les angles d'Euler (tangage $\theta$, roulis $\varphi$ et cap $\psi$) décrivant l'inclinaison du drone par rapport à un plan horizontal d'un repère terrestre établi avant le décollage du drone au moment de la mise sous tension du drone suivant la convention classique NED ("North, East, Down" en terminologie anglo-saxonne), étant entendu que les deux composantes longitudinale et transversale de la vitesse horizontale sont intimement liées à l'inclinaison suivant les deux axes respectifs de tangage et de roulis.

Le drone 10 est piloté par un dispositif de pilotage distant tel qu'un téléphone ou une tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via le dispositif de pilotage.

Le dispositif de pilotage distant est un appareil pourvu d'un écran tactile affichant un certain nombre de symboles permettant l'activation de commandes par simple contact du doigt d'un utilisateur sur l'écran tactile.

Le dispositif de pilotage communique avec le drone 10 via un échange bidirectionnel de données par liaison sans fil de type réseau local Wi-Fi (IEEE 802.11) ou Bluetooth (marques déposées) : du drone 10 vers le dispositif de pilotage notamment pour la transmission de données de vol, et du dispositif de pilotage vers le drone 10 pour l'envoi de commandes de pilotage.

Le dispositif de pilotage est également pourvu de capteurs d'inclinaison permettant de contrôler l'attitude du drone en envoyant des commandes selon des axes de roulis, de cap et de tangage dans le repère du drone (on pourra se référer au WO 2010/061099 A2 pour plus de détails sur ces aspects du système).

Quel que soit le mode de vol du drone, le dispositif de pilotage présente sur l'écran tactile les mêmes symboles de navigation, toutefois, les commandes de navigation émises au drone seront analysées au regard du repère réel du drone.

Ainsi, l'utilisateur pilote directement le drone par exemple, par une combinaison :

- de commandes disponibles sur l'écran tactile, notamment "montée/descente" et
- de signaux émis par le détecteur d'inclinaison de l'appareil : par exemple, pour faire avancer le drone l'utilisateur incline son appareil selon l'axe de tangage correspondant, et pour déporter le drone à droite ou à gauche il incline ce même appareil par rapport

à l'axe de roulis

Afin de permettre la mise en oeuvre des commandes de pilotage par le drone, en particulier, afin de contrôler dynamiquement l'attitude du drone lorsque le drone vole en utilisant la portance des ailes conformément à l'invention, il est mis en oeuvre un procédé de contrôle conformément à l'invention qui est maintenant décrit.

Lorsque le drone vole en utilisant la portance des ailes, le drone vole selon un angle de tangage $\theta$ donné lors de l'opération de conversion.

Conformément à l'invention, l'attitude du drone est contrôlée par l'envoi de commandes différenciées à un ou plusieurs desdits blocs propulseurs 14 de manière à produire une rotation du drone autour de l'axe de roulis et/ou de tangage et/ou de lacet du drone depuis une position angulaire courante vers une position angulaire finale, ces axes étant définis dans le repère du drone.

Ainsi, selon l'invention, l'attitude du drone peut être contrôlée sans que le drone ne dispose de gouverne. Autrement dit, l'attitude du drone peut être contrôlée uniquement par l'envoi desdites commandes à un ou plusieurs desdits blocs propulseurs. L'utilisateur va donc par activation des commandes de pilotage sur le dispositif de pilotage distant, permettre de modifier l'attitude du drone lorsque le drone vole en utilisant la portance des ailes, les commandes de pilotage provoquant une adaptation du régime de rotation des blocs propulseurs.

Pour ce faire, les commandes de pilotage sont émises au drone afin ensuite de déterminer les commandes à envoyer aux différents blocs propulseurs de manière à produire une rotation du drone autour de l'axe de roulis, et/ou de tangage et/ou de lacet du drone en fonction de la commande de l'utilisateur.

En vue de modifier l'attitude du drone conformément à l'invention, une commande est émise du dispositif de pilotage au drone comprenant une vitesse angulaire autour d'un axe de cap $\psi_{usr}$.

Afin d'effectuer un virage coordonné du drone, selon un mode de réalisation de l'invention, à partir de la vitesse angulaire autour d'un axe de cap $\psi_{usr}$, commandée par l'utilisateur, de l'angle d'incidence $\alpha$ du drone correspondant à l'angle d'inclinaison du drone selon l'axe de tangage par rapport à l'horizontal et de la vitesse aérodynamique de déplacement V du drone selon son inclinaison, c'est-à-dire la vitesse horizontale de déplacement du drone relativement à l'axe de tangage, le système intégré de navigation et de contrôle d'attitude du drone va générer une consigne de rotation autour de l'axe de roulis.

Ensuite, à partir de la vitesse de rotation commandée par l'utilisateur $\psi_{usr}$ et de la consigne de rotation autour de l'axe de roulis générée, le système intégré de navigation et de contrôle d'attitude du drone va déterminer, à partir d'un modèle de la dynamique du drone :

- une trajectoire en angle, en vitesse angulaire et/ou en accélération angulaire correspondant à la consigne donnée par l'utilisateur et utilisée comme référence par le système intégré de navigation et de contrôle d'attitude du drone, et

- une précommande d'anticipation afin d'exécuter cette trajectoire en boucle ouverte, cette précommande étant transmise au système intégré de navigation et de contrôle d'attitude du drone afin d'anticiper la trajectoire à parcourir. Cette précommande d'anticipation permet d'orienter le drone en mouvement sur la trajectoire souhaitée par l'utilisateur, le système intégré de navigation et de contrôle d'attitude du drone neutralisant les perturbations par rapport à la trajectoire.

A partir de la trajectoire angulaire déterminée, de la précommande d'anticipation et des mesures provenant de la centrale inertielle du drone, le système intégré de navigation et de contrôle d'attitude du drone va générer une ou des commandes différenciées et va les transmettre à un ou plusieurs des blocs propulseurs du drone de manière à produire la rotation du drone.

Il va être maintenant décrit les différentes étapes du procédé mis en oeuvre dans le drone afin de contrôler dynamiquement l'attitude du drone et en particulier déterminer les commandes différenciées à envoyer à un ou plusieurs blocs propulseurs du drone.

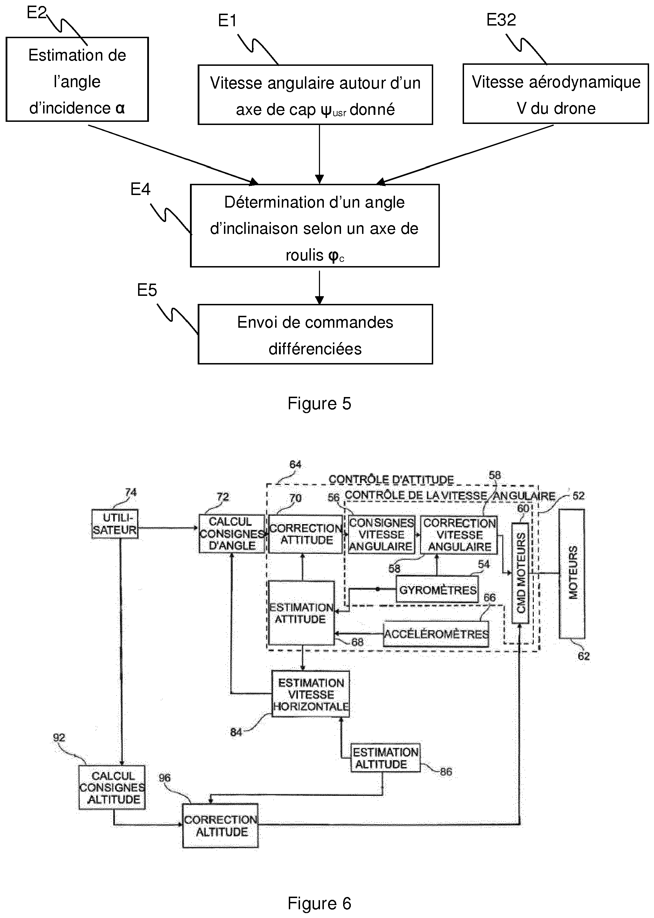

Le procédé de contrôle dynamique est illustré en Figure 5.

Le procédé comprend une étape E1 de réception d'une commande de rotation du drone, la commande comprenant une vitesse angulaire autour d'un axe de cap $\psi_{usr}$.

Le procédé comprend une étape E2 consistant en une étape d'estimation d'un angle d'incidence $\alpha$ du corps de drone par rapport à l'horizontale. En d'autres termes, l'angle d'incidence $\alpha$ correspond à l'angle de rotation du drone par rapport à l'horizontale d'un repère terrestre établi avant le décollage du drone au moment de la mise sous tension du drone suivant la convention classique NED. L'angle d'incidence $\alpha$, c'est-à-dire l'angle de tangage du drone lorsqu'il évolue en mode avion, est déterminé par exemple en fonction de l'angle de tangage $\theta$ dudit corps de drone. Notamment, l'angle d'incidence $\alpha$ peut être déterminé tel que :

$$\alpha = \|\theta\| - 90^\circ$$

$\theta$ étant défini comme l'angle de cabrage du drone, autrement dit l'angle de tangage du drone dans le repère drone.

L'angle d'incidence $\alpha$ est par exemple estimé à partir des mesures des capteurs inertiels du drone, notamment les accéléromètres et/ou les gyromètres équipant le drone, aptes à mesurer avec une certaine précision les angles d'attitude du drone, c'est-à-dire les angles d'Euler (tangage $\theta$, roulis $\varphi$ et cap $\psi$), décrivant l'inclinaison du drone par rapport à un plan horizontal d'un repère terrestre établi avant le décollage du drone au moment de la mise sous tension du drone suivant la convention classique NED.

Le procédé comprend une étape E3 de calcul de la vitesse aérodynamique V de déplacement du drone. La vitesse aérodynamique peut être une estimée de la vitesse horizontale du drone par rapport à l'air obtenue à partir d'un modèle.

Les étapes E1, E2 et E3 peuvent être exécutées séquentiellement, mais de préférence, ces étapes sont réalisées en parallèle à tout le moins en ce qui concerne les étapes E2 et E3.

Le procédé se poursuit par une étape E4 de détermination d'un angle d'inclinaison selon un axe de roulis $\varphi_c$ en fonction de l'angle d'incidence $\alpha$ estimé, de la vitesse aérodynamique V et de la vitesse angulaire donnée autour d'un axe de cap $\psi_{usr}$,

L'angle d'inclinaison peut être défini tel que :

$$\varphi_c = \tan^{-1} \frac{\cos \alpha \, V \dot{\psi}_{usr}}{g}$$

g étant l'accélération de la pesanteur.

L'étape E4 est suivie de l'étape E5 d'envoi d'une ou plusieurs commandes différenciées déterminées en fonction de l'angle d'inclinaison $\varphi_c$ déterminé à un ou plusieurs desdits blocs propulseurs du drone pour contrôler l'attitude dudit drone.

L'étape E5 d'envoi d'une ou plusieurs commandes différenciées comprend par exemple la génération de valeurs de consigne d'angle en roulis et l'application de ces valeurs de consigne à une boucle d'asservissement de contrôle des moteurs du drone.

Les étapes du procédé sont effectuées périodiquement jusqu'à atteindre ladite position angulaire finale, c'est-à-dire la position de vol souhaitée par l'utilisateur. En d'autres termes, les étapes du procédé sont réitérées tant que la position angulaire courante du drone n'a pas atteint la position angulaire finale souhaitée par l'utilisateur.

En outre, le procédé comprend :

- une étape d'estimation de la vitesse aérodynamique V de déplacement du drone à partir d'un modèle et
- une étape de mesure de l'altitude du drone, et
- une étape d'envoi de commandes différenciées des moteurs de manière à produire un maintien de l'altitude du drone, cette étape comprenant une phase de commande en boucle fermée des moteurs.

Afin de déterminer la vitesse aérodynamique du drone, il est nécessaire dans un premier temps de déterminer le coefficient de portance des ailes, notamment à partir de la géométrie de celles-ci. Selon un mode de réalisation particulier, il est utilisé la théorie des profils minces. Cette théorie est principalement valide lorsque le drone vole quasiment en ayant un angle de tangage de 90°. Cette théorie permet d'obtenir une courbe de vitesse pour les différentes valeurs d'angle de tangage du drone. Les valeurs de vitesse sont légèrement sous-estimées mais permettent tout de même une bonne évaluation du coefficient de portance des ailes. Le coefficient de portance $C_L$ est défini de la manière suivante :

$$C_L = +2\pi\alpha \frac{\Lambda}{\Lambda + 2} \text{ , avec } \Lambda = \frac{b^2}{S}$$

Avec $b$ étant l'envergure de l'aile, $S$ sa surface de l'aile et $\alpha$ l'angle d'incidence.

Il est à noter que $C_L$ est le coefficient de portance à incidence nulle, qui vaut 0 lorsque le profil d'aile est symétrique.

A partir du coefficient $C_L$ de la portance déterminé nécessaire pour compenser le poids du drone pour chaque inclinaison selon l'angle de tangage du drone, il est déterminé la vitesse aérodynamique du drone V. Pour cela il est déterminé la force de portance L selon la formulée suivante :

$$L = \frac{1}{2}\rho S V^2 C_L$$

p étant la masse volumique de l'air.

On en déduit que la vitesse aérodynamique V du drone est :

$$V = \sqrt{\frac{2L}{\rho S C_L}}$$

L'envoi d'une ou plusieurs commandes différenciées est exécuté après la génération de valeurs de consigne d'angle en roulis correspondant à l'angle d'inclinaison à mettre en oeuvre et l'application de ces valeurs de consigne à une boucle d'asservissement de contrôle des moteurs du drone.

La consigne d'angle est déterminée sous forme de trajectoire angulaire idéale que le drone devrait suivre et sera utilisée comme consigne par le système intégré de navigation et de contrôle d'attitude du drone. La commande permettant d'exécuter cette trajectoire en boucle ouverte constitue une précommande d'anticipation qui complète la commande du système intégré de navigation et de contrôle d'attitude du drone, cette commande étant déterminée à partir d'une boucle d'asservissement en considérant la différence entre la trajectoire idéale que le drone devrait poursuivre conformément à la consigne reçue et la trajectoire qu'il effectue réellement. Selon un mode de réalisation de l'invention, lorsque la commande reçue par le drone est une commande contenant une vitesse angulaire autour de l'axe de tangage, le vol du drone en mode avion étant réalisé selon un angle de tangage donné, alors cette commande aura pour conséquence d'accroitre et de décroitre la vitesse horizontale de vol du drone.

Cette commande d'accélération / décélération va entrainer une modification de l'équilibre du drone, selon son axe de tangage, notamment en augmentant ou en diminuant le régime de rotation des moteurs.

Toutefois, une telle modification du régime des moteurs a pour incidence une modification de l'altitude du drone. Pour éviter une telle incidence, il est prévu des organes de contrôle et d'asservissement sur l'altitude du drone, ces organes sont couplés à un accéléromètre vertical et/ou un baromètre. Un tel contrôle permet de compenser les erreurs potentielles sur le drone qui pourraient entrainer des effets non désirés sur l'altitude.

Un tel contrôle sur l'altitude est d'autant plus important que l'angle de tangage de vol du drone est faible. En effet, lorsque l'angle de tangage est tel que les ailes sont quasiment horizontales à la direction de vol, l'accélération et la décélération du régime des moteurs ne permettent plus de régler l'altitude du drone mais la vitesse horizontale de déplacement du drone.

Selon un mode de réalisation de l'invention, lorsque la commande reçue est une commande de modification de l'altitude du drone, c'est-à-dire une commande pour effectuer une montée ou une descente du drone en mode de vol avion, le procédé de contrôle va augmenter le régime de rotation des blocs propulseurs et va augmenter le cabrage du drone, c'est-à-dire diminuer l'angle de tangage du drone lors d'une commande de montée du drone, et va maintenir l'inclinaison de tangage du drone et diminuer le régime des blocs propulseurs lors d'une commande de descente du drone.

La Figure 6 est un schéma par blocs fonctionnels des différents organes de contrôle et d'asservissement du drone. On notera toutefois que, bien que ce schéma soit présenté sous forme de circuits interconnectés, la mise en oeuvre des différentes fonctions est essentiellement logicielle, et cette représentation n'a qu'un caractère illustratif.

Le procédé de contrôle dynamique d'attitude d'un drone à voilure tournante conformément à l'invention met en jeu plusieurs boucles imbriquées pour le contrôle de la vitesse angulaire et de l'attitude du drone, en plus du contrôle des variations d'altitude automatiquement ou sous l'effet d'une commande de l'utilisateur.

La boucle la plus centrale, qui est la boucle 52 de contrôle de la vitesse angulaire, utilise d'une part les signaux fournis par des gyromètres 54, et d'autre part une référence constituée par des consignes de vitesse angulaire 56, ces différentes informations étant appliquées en entrée d'un étage 58 de correction de la vitesse angulaire. Cet étage 58 pilote un étage 60 de contrôle des moteurs 62 afin de commander séparément le régime des différents moteurs pour commander la vitesse angulaire du drone par l'action combinée des rotors entraînés par ces moteurs.

La boucle 52 de contrôle de la vitesse angulaire est imbriquée dans une boucle 64 de contrôle d'attitude, qui opère à partir des indications fournies par les gyromètres 54 et des accéléromètres 66, ces données étant appliquées en entrée d'un étage d'estimation d'attitude 68 dont la sortie est appliquée à un étage 70 de correction d'attitude de type PI (Proportionnel-Intégrateur). L'étage 70 délivre à l'étage 56 des consignes de vitesse angulaire, qui sont également fonction de consignes d'angle générées par un circuit 72 à partir de commandes directement appliquées par l'utilisateur 74, ces consignes d'angle sont générées conformément au procédé de contrôle dynamique d'attitude du drone selon l'invention.

À partir de l'erreur entre la consigne et la mesure de l'angle donnée par le circuit d'estimation d'attitude 68, la boucle 64 de contrôle d'attitude (circuits 54 à 70) calcule une consigne en vitesse angulaire à l'aide du correcteur PI du circuit 70. La boucle 52 de contrôle de la vitesse angulaire (circuits 54 à 60) calcule ensuite la différence entre la consigne de vitesse angulaire précédente et la vitesse angulaire effectivement mesurée par les gyromètres 54. La boucle calcule à partir de ces informations les différentes consignes de vitesse de rotation à envoyer aux moteurs 62 du drone pour réaliser la rotation demandée par l'utilisateur.

L'estimation de la vitesse horizontale V par le circuit 84 est réalisée à partir des informations fournies par le circuit d'estimation d'attitude 68 et de l'estimation d'altitude donnée par le circuit 86 ainsi que d'un modèle. L'estimation de la vitesse horizontale V réalisée par le circuit 84 est fournie au circuit 72 pour la mise en oeuvre du procédé de contrôle dynamique d'attitude du drone conformément à l'invention.

En ce qui concerne les déplacements en altitude du drone en vol avion, l'utilisation 74 applique une consigne d'altitude à un circuit 92 qui calcule à partir du circuit 96 une consigne d'altitude à partir de l'estimation d'altitude donnée par le circuit 86.

## Revendications

1. Procédé de contrôle dynamique d'attitude d'un drone à voilure tournante comprenant

   - un corps de drone (12) comprenant une carte électronique contrôlant le pilotage du drone,
   - quatre bras de liaison (16), chaque bras comprenant fixé solidairement un bloc propulseur (14),

   **caractérisé en ce que** les quatre bras de liaison (16) forment des ailes portantes, et lorsque le drone vole en utilisant la portance des quatre ailes, l'attitude du drone est contrôlée par l'envoi de commandes différenciées à un ou plusieurs desdits blocs propulseurs de manière à produire une rotation du drone autour de l'axe de roulis et/ou de tangage et/ou de lacet du drone depuis une position angulaire courante à une position angulaire finale, ces axes étant définis dans le repère du drone.

2. Procédé de contrôle dynamique selon la revendication précédente, **caractérisé en ce que** l'attitude du drone est contrôlée uniquement par l'envoi desdites commandes à un ou plusieurs desdits blocs propulseurs.

3. Procédé de contrôle dynamique selon l'une quelconque des revendications précédentes, **caractérisé en ce que** le procédé comprend :

   • Une étape d'estimation d'un angle d'incidence $\alpha$ du corps de drone par rapport à l'horizontale (E2),

   • Une étape de calcul de la vitesse aérodynamique V de déplacement du drone (E3),
   • Une étape de détermination d'un angle d'inclinaison selon un axe de roulis $\varphi_c$ en fonction de l'angle d'incidence $\alpha$ estimé, de la vitesse aérodynamique V et d'une vitesse angulaire donnée autour d'un axe de cap $\psi_{usr}$ (E4), et
   • Une étape d'envoi d'une ou plusieurs commandes différenciées déterminées en fonction de l'angle d'inclinaison $\varphi_c$ déterminé à un ou plusieurs desdits blocs propulseurs pour contrôler l'attitude dudit drone (E5).

4. Procédé de contrôle dynamique selon la revendication précédente, **caractérisé en ce que** l'étape d'envoi d'une ou plusieurs commandes différenciées comprend la génération de valeurs de consigne d'angle en roulis et l'application de ces valeurs de consigne à une boucle d'asservissement de contrôle des moteurs du drone.

5. Procédé de contrôle dynamique selon la revendication 3 ou la revendication 4, **caractérisé en ce que** les étapes du procédé sont effectuées périodiquement jusqu'à atteindre ladite position angulaire finale.

6. Procédé de contrôle dynamique selon l'une quelconque des revendications 3 à 5, **caractérisé en ce que** l'angle d'incidence $\alpha$ est déterminé en fonction de l'angle de tangage $\theta$ dudit corps de drone.

7. Procédé de contrôle dynamique selon la revendication précédente, **caractérisé en ce que** l'angle d'incidence $\alpha$ est déterminé tel que :

$$\alpha = \|\theta\| - 90°$$

8. Procédé de contrôle dynamique selon la revendication précédente, **caractérisé en ce que** l'angle d'inclinaison est tel que :

$$\varphi_c = \tan^{-1} \frac{\cos \alpha \, V \dot{\psi}_{usr}}{g}$$

g étant l'accélération de la pesanteur.

9. Procédé de contrôle dynamique selon l'une quelconque des revendications précédentes, **caractérisé en ce que** le procédé comprend en outre :

   ◦ une étape d'estimation de la vitesse aérodynamique V de déplacement du drone à partir d'un modèle et
   ◦ une étape de mesure de l'altitude du drone,

**EP 3 260 945 A1**

◦ une étape d'envoi de commandes différenciées des moteurs de manière à produire un maintien de l'altitude du drone, cette étape comprenant une phase de commande en boucle fermée des moteurs.

**10.** Procédé de contrôle dynamique selon l'une quelconque des revendications 1 à 8, **caractérisé en ce que** le contrôle de la vitesse horizontale du drone est réalisé par une modification de l'angle de tangage.

**11.** Drone à voilure tournante (10) comprenant

- un corps de drone (12) comprenant une carte électronique contrôlant le pilotage du drone,
- quatre bras de liaison (16), chaque bras comprenant fixé solidairement un bloc propulseur (14),

**Caractérisé en ce que** les quatre bras de liaison (16) forment des ailes portantes et **en ce que** le drone est apte à mettre en oeuvre le procédé de contrôle dynamique d'attitude dudit drone selon l'une des revendications 1 à 10.

Figure 1

Figure 2

Figure 3

Figure 4

E2

E1

E32

Estimation de
l'angle
d'incidence α

Vitesse angulaire autour d'un
axe de cap ψ$_{usr}$ donné

Vitesse aérodynamique
V du drone

E4

Détermination d'un angle
d'inclinaison selon un axe de
roulis φ$_c$

E5

Envoi de commandes
différenciées

Figure 5

Figure 6

Europäisches
Patentamt

European
Patent Office

Office européen
des brevets

# RAPPORT DE RECHERCHE EUROPEENNE

Numéro de la demande

EP 17 17 6713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/144957 A1 (CLARIDGE JERRY DANIEL [US] ET AL) 26 mai 2016 (2016-05-26) | 1-11 | INV. G05D1/08 |
| Y | * le document en entier * | 3-9 | |
| | ----- | | ADD. |
| Y | EP 2 497 555 A1 (PARROT [FR]) 12 septembre 2012 (2012-09-12) * le document en entier * | 3-9 | B64C29/00 |
| | ----- | | |
| A | Anonymous: "Virage en vol horizontal", , 15 février 2016 (2016-02-15), XP055346911, Extrait de l'Internet: URL:https://web.archive.org/web/2016021510 2509/http://lavionnaire.fr/MecaVirages.php [extrait le 2017-02-16] * le document en entier * | 8 | |
| | ----- | | |
| X | Anonymous: "X PlusOne: Your Ultimate Hover + Speed Aerial Camera Drone by xCraft - Kickstarter", , 3 octobre 2015 (2015-10-03), XP055346077, Extrait de l'Internet: URL:https://web.archive.org/web/2015100307 3706/https://www.kickstarter.com/projects/ 137596013/x-plusone-your-ultimate-hover-sp eed-aerial-camera/description [extrait le 2017-02-15] * le document en entier * | 1-11 | DOMAINES TECHNIQUES RECHERCHES (IPC) G05D B64C |
| | ----- | | |

Le présent rapport a été établi pour toutes les revendications

| Lieu de la recherche | Date d'achèvement de la recherche | Examinateur |
|---|---|---|
| Munich | 25 octobre 2017 | Alesandrini, Bruno |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 3 260 945 A1**

**ANNEXE AU RAPPORT DE RECHERCHE EUROPEENNE
RELATIF A LA DEMANDE DE BREVET EUROPEEN NO.**

EP 17 17 6713

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-10-2017

| Document brevet cité au rapport de recherche | Date de publication | Membre(s) de la famille de brevet(s) | Date de publication |
|---|---|---|---|
| US 2016144957 A1 | 26-05-2016 | AU 2015354671 A1<br>CN 105620735 A<br>EP 3224140 A1<br>US 2016144957 A1<br>WO 2016085610 A1 | 13-07-2017<br>01-06-2016<br>04-10-2017<br>26-05-2016<br>02-06-2016 |
| EP 2497555 A1 | 12-09-2012 | CN 102671390 A<br>EP 2497555 A1<br>FR 2972364 A1<br>JP 6012205 B2<br>JP 2012198883 A<br>US 2012232718 A1 | 19-09-2012<br>12-09-2012<br>14-09-2012<br>25-10-2016<br>18-10-2012<br>13-09-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- EP 2364757 A1

- EP 2450862 A1